(19) Europäisches Patentamt
European Patent Office
Office européen des brevets

(11) EP 4 220 804 A1

(12) EUROPEAN PATENT APPLICATION
published in accordance with Art. 153(4) EPC

(43) Date of publication:
**02.08.2023 Bulletin 2023/31**

(21) Application number: **22846000.2**

(22) Date of filing: **30.03.2022**

(51) International Patent Classification (IPC):
***H01M 10/0567*** *(2010.01)* ***H01M 10/052*** *(2010.01)*

(52) Cooperative Patent Classification (CPC):
**H01M 10/052; H01M 10/0567;** Y02E 60/10

(86) International application number:
**PCT/KR2022/004549**

(87) International publication number:
**WO 2023/003128 (26.01.2023 Gazette 2023/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.07.2021 KR 20210096464**

(71) Applicant: **Samsung SDI Co., Ltd.**
**Yongin-si, Gyeonggi-do 17084 (KR)**

(72) Inventors:
- **KIM, Sanghyung**
  **Yongin-si, Gyeonggi-do 17084 (KR)**
- **LEE, Tae Jin**
  **Yongin-si, Gyeonggi-do 17084 (KR)**
- **KIM, Minseo**
  **Yongin-si, Gyeonggi-do 17084 (KR)**
- **WOO, Myungheui**
  **Yongin-si, Gyeonggi-do 17084 (KR)**
- **PARK, Hyejin**
  **Yongin-si, Gyeonggi-do 17084 (KR)**
- **KIM, Sanghoon**
  **Yongin-si, Gyeonggi-do 17084 (KR)**
- **KIM, Dahyun**
  **Yongin-si, Gyeonggi-do 17084 (KR)**
- **RYU, Bokyung**
  **Yongin-si, Gyeonggi-do 17084 (KR)**

(74) Representative: **Gulde & Partner**
**Patent- und Rechtsanwaltskanzlei mbB**
**Wallstraße 58/59**
**10179 Berlin (DE)**

# (54) ELECTROLYTE FOR RECHARGEABLE LITHIUM BATTERY AND RECHARGEABLE LITHIUM BATTERY INCLUDING THE SAME

(57) Provided are an electrolyte for a rechargeable lithium battery including a non-aqueous organic solvent, a lithium salt, and an additive, wherein the additive is a composition including a first compound and a second compound, the first compound is a cesium salt compound, and the second compound represented by Chemical Formula 1, and a rechargeable lithium battery including the same.

Details of Chemical Formula 1 are as described in the specification.

EP 4 220 804 A1

FIG. 1

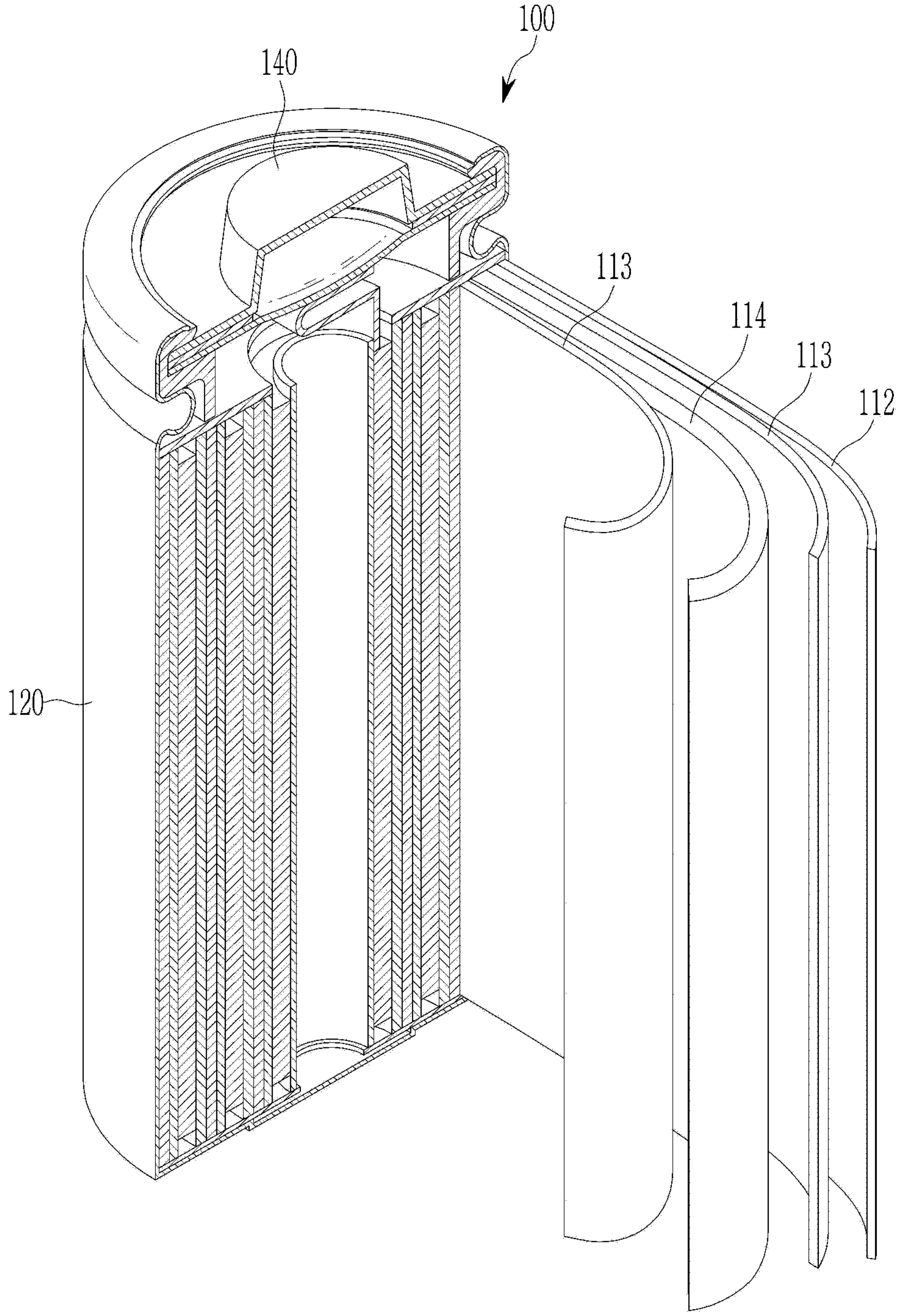

## Description

**[Technical Field]**

This disclosure relates to an electrolyte for a rechargeable lithium battery and a rechargeable lithium battery including the same.

**[Background Art]**

A rechargeable lithium battery may be recharged and has three or more times as high energy density per unit weight as a conventional lead storage battery, nickel-cadmium battery, nickel hydrogen battery, nickel zinc battery and the like. It may be also charged at a high rate and thus, is commercially manufactured for a laptop, a cell phone, an electric tool, an electric bike, and the like, and researches on improvement of additional energy density have been actively made.

Such a rechargeable lithium battery is manufactured by injecting an electrolyte into a battery cell, which includes a positive electrode including a positive electrode active material capable of intercalating/deintercalating lithium ions and a negative electrode including a negative electrode active material capable of intercalating/deintercalating lithium ions.

The electrolyte serves as a medium for moving lithium ions between the negative electrode and the positive electrode, and may generally include an organic solvent in which lithium salt is dissolved, and this electrolyte is important in determining stability and performance of a rechargeable lithium battery.

The electrolyte may universally include, for example, a mixed solvent of high dielectric cyclic carbonates such as propylene carbonate and ethylene carbonate and chain carbonates such as diethyl carbonate, ethyl methyl carbonate and dimethyl carbonate in which a lithium salt such as $LiPF_6$, $LiBF_4$, or LiFSI is added. As the development of batteries in various fields is activated, the development of batteries having high output and high stability in a wide temperature range is becoming more important. In terms of the electrolyte, it is important to develop an optimal combination of an organic solvent and additives capable of providing high output, long cycle-life characteristics, high-temperature storage characteristics, and suppressing swelling, decrease in capacity, and increase in resistance.

**[Disclosure]**

[Technical Problem]

An embodiment provides an electrolyte for a rechargeable lithium battery having excellent output characteristics, high-temperature characteristics, and safety.

Another embodiment provides a rechargeable lithium battery having improved high-temperature storage characteristics, cycle-life characteristics, and safety by applying the electrolyte.

[Technical Solution]

An embodiment of the present invention provides an electrolyte for a rechargeable lithium battery including a non-aqueous organic solvent, a lithium salt, and an additive, wherein the additive is a composition including a first compound and a second compound, the first compound is a cesium salt compound, and the second compound is represented by Chemical Formula 1.

[Chemical Formula 1]

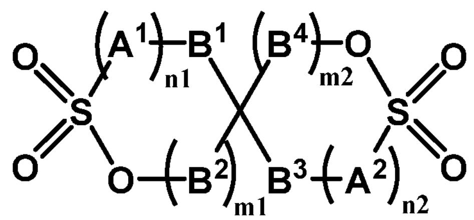

In Chemical Formula 1,
$A^1$ is O or $C(R^1)(R^2)$,

$A^2$ is O or $C(R^3)(R^4)$,
$B^1$ is $C(R^5)(R^6)$ or a carbonyl group,
$B^2$ is $C(R^7)(R^8)$ or a carbonyl group,
$B^3$ is $C(R^9)(R^{10})$ or a carbonyl group,
$B^4$ is $C(R^{11})(R^{12})$ or a carbonyl group,
$R^1$ to $R^{12}$ are each independently hydrogen, a halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C3 to C20 cycloalkynyl group, a substituted or unsubstituted C6 to C30 aryl group, or a substituted or unsubstituted C2 to C30 heterocyclic group,
n1, n2, m1, and m2 are each independently an integer of 0 or 1,
$n1 + m1 \geq 1$, and $n2 + m2 \geq 1$.

An anion of the cesium salt compound may be an imide-based anion or a phosphate-based anion.
The cesium salt compound may be represented by Chemical Formula 2 or 3.

[Chemical Formula 2] [Chemical Formula 3]

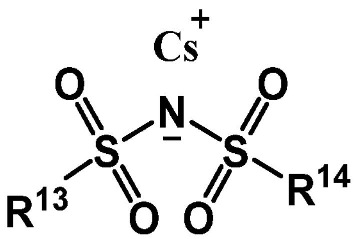

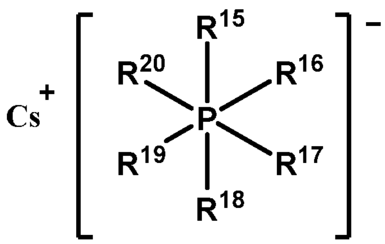

In Chemical Formulas 2 and 3,
**[0012]** $R^{13}$ to $R^{20}$ are each independently a fluoro group or a C1 to C4 fluoroalkyl group substituted with one or more fluoro group.
Chemical Formula 2 may be represented by Chemical Formula 2-1 or 2-2.

[Chemical Formula 2-1] [Chemical Formula 2-2]

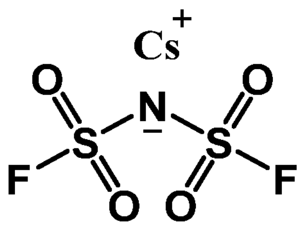

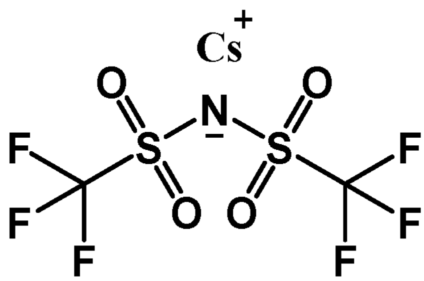

Chemical Formula 3 may be represented by Chemical Formula 3-1.

[Chemical Formula 3-1]

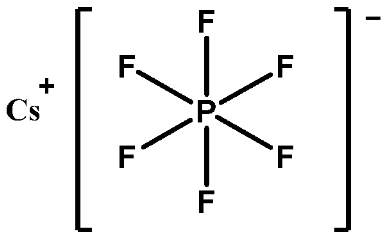

The first compound may be included in an amount of 0.05 to 3.0 parts by weight based on 100 parts by weight of the electrolyte for the rechargeable lithium battery.

The second compound may be represented by any one of Chemical Formulas 1-1 to 1-4.

[Chemical Formula 1-1] [Chemical Formula 1-2]

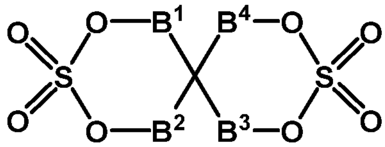

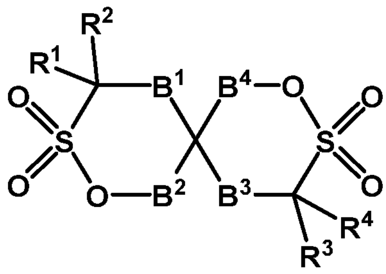

[Chemical Formula 1-3] [Chemical Formula 1-4]

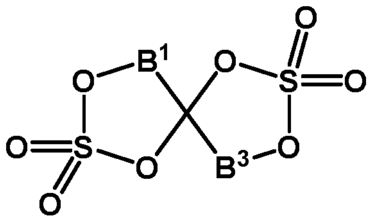

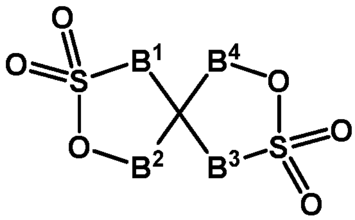

In Chemical Formulas 1-1 to 1-4,
$B^1$ to $B^4$ and $R^1$ to $R^4$ are the same as described above.

The second compound may be represented by any one of Chemical Formulas 1A to 1D.

[Chemical Formula 1A] [Chemical Formula 1B]

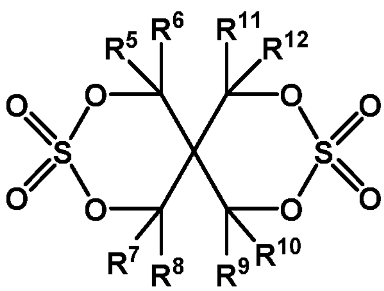

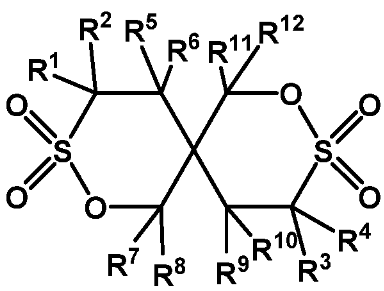

[Chemical Formula 1C] [Chemical Formula 1D]

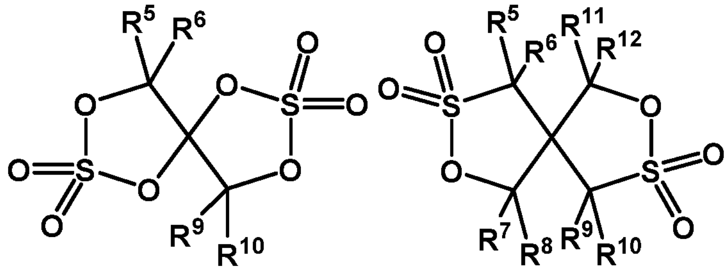

In Chemical Formulas 1A to 1D,
$R^5$ to $R^{12}$ are the same as described above.

The second compound may be any one selected from compounds listed in Group 1.

[Group 1]

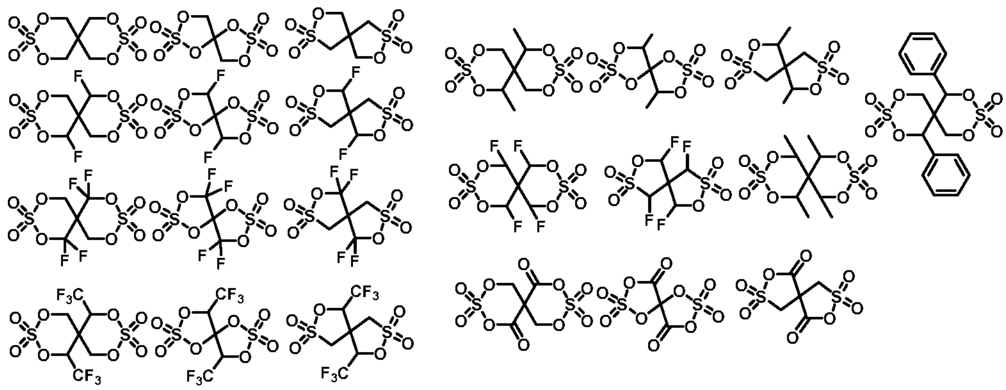

The second compound may be included in an amount of 0.1 to 10.0 parts by weight based on 100 parts by weight of the electrolyte for the rechargeable lithium battery.

The composition may include the first compound and the second compound in a weight ratio of 1:1 to 1:50.

The composition may include the first compound and the second compound in a weight ratio of 1:1 to 1:20.

The composition may be included in an amount of 0.2 to 10.0 parts by weight based on 100 parts by weight of the electrolyte for the rechargeable lithium battery.

Another embodiment of the present invention provides a rechargeable lithium battery including a positive electrode including a positive electrode active material, a negative electrode including a negative electrode active material, and the aforementioned electrolyte for a rechargeable lithium battery.

The positive electrode active material may be represented by Chemical Formula 6 below.

[Chemical Formula 6] $Li_xM^1_yM^2_zM^3_{1-y-z}O_{2-a}X_a$

In Chemical Formula 6,

$0.5 \le x \le 1.8$, $0 \le a \le 0.05$, $0 < y \le 1$, $0 \le z \le 1$, $0 \le y+z \le 1$, $M^1$, $M^2$, and $M^3$ each independently include one or more element selected from a metal such as Ni, Co, Mn, Al, B, Ba, Ca, Ce, Cr, Fe, Mo, Nb, Si, Sr, Mg, Ti, V, W, Zr, or La, and a combination thereof, and X include one or more element selected from F, S, P, and Cl.

In Chemical Formula 6, $0.8 \ge y \le 1$, $0 \le z \le 0.2$, and $M^1$ may be Ni.

The negative electrode active material may be graphite or may include a Si composite and graphite together.

The Si composite may include a core including Si-based particles and an amorphous carbon coating layer.

The Si-based particle may include a Si-C composite, $SiO_x$ ($0 < x \le 2$), a Si alloy or a mixture thereof.

The Si-C composite may include a core including Si particles and crystalline carbon and an amorphous carbon coating layer on the surface of the core, and

an average particle diameter of the Si particles may be 50 nm to 200 nm.

[Advantageous Effects]

By applying an additive with improved output characteristics, an increase in battery resistance during high-temperature storage may be suppressed, and a rechargeable lithium battery with improved cycle-life characteristics and safety may be implemented.

**[Description of the Drawings]**

FIG. 1 is a schematic view showing a rechargeable lithium battery according to an embodiment of the present invention.

<Description of Symbols>

100: rechargeable lithium battery
112: negative electrode
113: separator
114: positive electrode
120: battery case
140: sealing member

**[Mode for Invention]**

Hereinafter, a rechargeable lithium battery according to an embodiment of the present invention will be described in detail with reference to the accompanying drawings. However, these embodiments are exemplary, the present invention is not limited thereto and the present invention is defined by the scope of claims.

In the present specification, unless otherwise defined, "substituted" means that at least one hydrogen in a substituent or compound is deuterium, a halogen group, a hydroxyl group, an amino group, a substituted or unsubstituted C1 to C30 amine group, a nitro group, a substituted or unsubstituted C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group, or a combination thereof.

In one example of the present invention, "substituted" refers to replacement of at least one hydrogen of a substituent or a compound by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. In addition, in specific examples of the present invention, "substituted" refers to replacement of at least on hydrogen of a substituent or a compound by deuterium, a halogen, a C1 to C20 alkyl group, a C6 to C30 aryl group, a C1 to C10 fluoroalkyl group, or a cyano group. In addition, in specific examples of the present invention, "substituted" refers to replacement of at least one hydrogen of a substituent or a compound by deuterium, a halogen, a C1 to C5 alkyl group, a C6 to C18 aryl group, a C1 to C5 fluoroalkyl group, or a cyano group. In addition, in specific examples of the present invention, "substituted" refers to replacement of at least one hydrogen of a substituent or a compound by deuterium, a cyano group, a halogen, a methyl group, an ethyl group, a propyl group, a butyl group, a phenyl group, a biphenyl group, a terphenyl group, a trifluoromethyl group, or a naphthyl group.

In the present specification, unless otherwise defined, "hetero" refers to one including one to three heteroatoms selected from N, O, S, P, and Si, and remaining carbons in one functional group.

In the present specification, "aryl group" refers to a group including at least one hydrocarbon aromatic moiety, and all the elements of the hydrocarbon aromatic moiety have p-orbitals which form conjugation, for example a phenyl group, a naphthyl group, and the like, two or more hydrocarbon aromatic moieties may be linked by a sigma bond and may be, for example a biphenyl group, a terphenyl group, a quarterphenyl group, and the like, and two or more hydrocarbon aromatic moieties are fused directly or indirectly to provide a nonaromatic fused ring, for example a fluorenyl group.

The aryl group may include a monocyclic, polycyclic or fused ring polycyclic (i.e., rings sharing adjacent pairs of carbon atoms) functional group.

In the present specification, "heterocyclic group" is a generic concept of a heteroaryl group, and may include one or more heteroatom selected from N, O, S, P, and Si instead of carbon (C) in a cyclic compound such as aryl group, a cycloalkyl group, a fused ring thereof, or a combination thereof. When the heterocyclic group is a fused ring, the entire ring or each ring of the heterocyclic group may include one or more heteroatoms.

For example, "heteroaryl group" may refer to aryl group including one or more heteroatom selected from N, O, S, P, and Si. Two or more heteroaryl groups are linked by a sigma bond directly, or when the heteroaryl group includes two or more rings, the two or more rings may be fused. When the heteroaryl group is a fused ring, each ring may include one to three heteroatoms.

More specifically, the substituted or unsubstituted C6 to C30 aryl group may be a substituted or unsubstituted phenyl group, a substituted or unsubstituted naphthyl group, a substituted or unsubstituted anthracenyl group, a substituted or unsubstituted phenanthrenyl group, a substituted or unsubstituted naphthacenyl group, a substituted or unsubstituted pyrenyl group, a substituted or unsubstituted biphenyl group, a substituted or unsubstituted p-terphenyl group, a substituted or unsubstituted m-terphenyl group, a substituted or unsubstituted o-terphenyl group, a substituted or unsubstituted chrysenyl group, a substituted or unsubstituted triphenylene group, a substituted or unsubstituted perylenyl group, a substituted or unsubstituted fluorenyl group, a substituted or unsubstituted indenyl group, a substituted or unsubstituted furanyl group, or a combination thereof, but is not limited thereto.

More specifically, the substituted or unsubstituted C2 to C30 heterocyclic group may be a substituted or unsubstituted thiophenyl group, a substituted or unsubstituted pyrrolyl group, a substituted or unsubstituted pyrazolyl group, a substituted or unsubstituted imidazolyl group, a substituted or unsubstituted triazolyl group, a substituted or unsubstituted oxazolyl group, a substituted or unsubstituted thiazolyl group, a substituted or unsubstituted oxadiazolyl group, a substituted or unsubstituted thiadiazolyl group, a substituted or unsubstituted pyridyl group, a substituted or unsubstituted pyrimidinyl group, a substituted or unsubstituted pyrazinyl group, a substituted or unsubstituted triazinyl group, a substituted or unsubstituted benzofuranyl group, a substituted or unsubstituted benzothiophenyl group, a substituted or unsubstituted benzimidazolyl group, a substituted or unsubstituted indolyl group, a substituted or unsubstituted quinolinyl group, a substituted or unsubstituted isoquinolinyl group, a substituted or unsubstituted quinazolinyl group, a substituted or unsubstituted quinoxalinyl group, a substituted or unsubstituted naphthyridinyl group, a substituted or unsubstituted benzoxazinyl group, a substituted or unsubstituted benzthiazinyl group, a substituted or unsubstituted acridinyl group, a substituted or unsubstituted phenazinyl group, a substituted or unsubstituted phenothiazinyl group, a substituted or unsubstituted phenoxazinyl group, a substituted or unsubstituted carbazolyl group, a substituted or unsubstituted dibenzofuranyl group, or a substituted or unsubstituted dibenzothiophenyl group, or a combination thereof, but is not limited thereto.

A rechargeable lithium battery may be classified into a lithium ion battery, a lithium ion polymer battery, and a lithium polymer battery depending on kinds of a separator and an electrolyte. It also may be classified to be cylindrical, prismatic, coin-type, pouch-type, and the like depending on shape. In addition, it may be bulk type and thin film type depending on sizes. Structures and manufacturing methods for lithium ion batteries pertaining to this disclosure are well known in the art.

Herein, as an example of a rechargeable lithium battery, a cylindrical rechargeable lithium battery is for example described. FIG. 1 schematically illustrates the structure of a rechargeable lithium battery according to an embodiment. Referring to FIG. 1, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte (not shown) impregnating the positive electrode 114, negative electrode 112, and separator 113, a battery case 120 housing the battery cell, and a sealing member 140 sealing the battery case 120.

Hereinafter, a more detailed configuration of the rechargeable lithium battery 100 according to an embodiment of the present invention will be described.

A rechargeable lithium battery according to one embodiment of the present invention includes an electrolyte, a positive electrode, and a negative electrode.

The electrolyte includes a non-aqueous organic solvent, a lithium salt, and an additive, wherein the additive is a composition including a first compound and a second compound, the first compound is a cesium salt compound, and the second compound is represented by Chemical Formula 1.

[Chemical Formula 1]

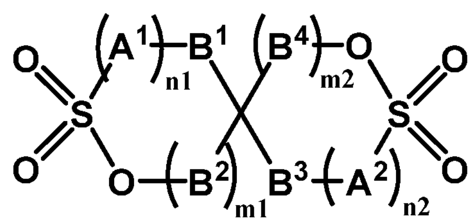

In Chemical Formula 1,

$A^1$ is O or $C(R^1)(R^2)$,

$A^2$ is O or $C(R^3)(R^4)$,

$B^1$ is $C(R^5)(R^6)$ or a carbonyl group,

$B^2$ is $C(R^7)(R^8)$ or a carbonyl group,

$B^3$ is $C(R^9)(R^{10})$ or a carbonyl group,

$B^4$ is $C(R^{11})(R^{12})$ or a carbonyl group,

$R^1$ to $R^{12}$ are each independently hydrogen, a halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C3 to C20 cycloalkynyl group, a substituted or unsubstituted C6 to C30 aryl group, or a substituted or unsubstituted C2 to C30 heterocyclic group,

n1, n2, m1, and m2 are each independently an integer of 0 or 1,

$n1 + m1 \geq 1$, and $n2 + m2 \geq 1$.

The first compound is a cesium salt compound and decomposed in the electrolyte and thus forms a film on the surfaces of the positive and negative electrodes to effectively control elution of lithium ions from the positive electrode, preventing decomposition of the positive electrode. Specifically, the first compound is reduced and decomposed earlier than a carbonate-based solvent included in the non-aqueous organic solvent and thus forms a SEI (solid electrolyte interface) film on the surface of the negative electrode to prevent decomposition of the electrolyte and decomposition of the electrode due to the decomposition of the electrolyte and thus suppress an increase in internal resistance due to gas generation.

In addition, the second compound is a bicyclic sulfate-based or bicyclic sulfite-based compound and may exhibit an effect of improving output characteristics by suppressing the resistance increase in the film due to the first compound.

That is, by including the first compound and the second compound together, a rechargeable lithium battery with improved cycle-life characteristics due to resistance increase suppression and improvement of output characteristics may be implemented.

For example, an anion of the cesium salt compound may be an imide-based anion or a phosphate-based anion.

As a specific example, the cesium salt compound may be represented by Chemical Formula 2 or 3.

[Chemical Formula 2] [Chemical Formula 3]

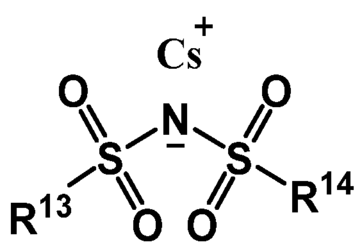

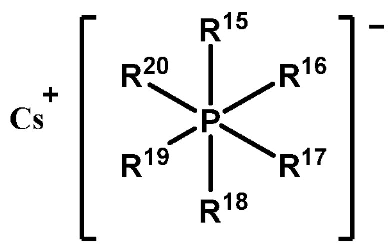

In Chemical Formulas 2 and 3,

$R^{13}$ to $R^{20}$ are each independently a fluoro group or a C1 to C4 fluoroalkyl group substituted with one or more fluoro group.

For example, $R^{13}$ to $R^{20}$ in Chemical Formulas 2 and 3 may each independently be a fluoro group or a C1 to C4 fluoroalkyl group substituted with two or more fluoro groups.

For example, $R^{13}$ to $R^{20}$ in Chemical Formulas 2 and 3 may each independently be a fluoro group or a C1 to C4 fluoroalkyl group substituted with three or more fluoro groups.

As a specific example, $R^{13}$ to $R^{20}$ in Chemical Formulas 2 and 3 may each independently be a fluoro group or a C1 to C3 fluoroalkyl group substituted with three or more fluoro groups.

As a more specific example, $R^{13}$ to $R^{20}$ in Chemical Formulas 2 and 3 may each independently be a fluoro group or a C1 to C2 fluoroalkyl group substituted with three or more fluoro groups.

For example, Chemical Formula 2 may be represented by Chemical Formula 2-1 or 2-2.

[Chemical Formula 2-1] [Chemical Formula 2-2]

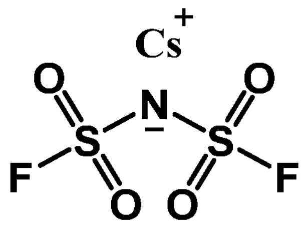 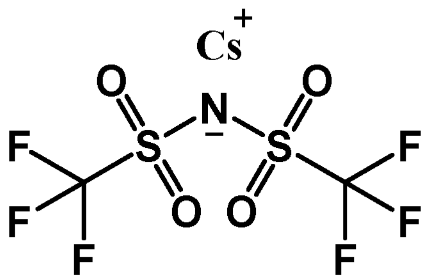

For example, Chemical Formula 3 may be represented by Chemical Formula 3-1.

[Chemical Formula 3-1]

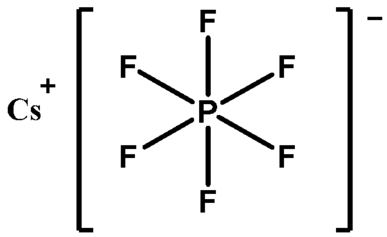

For example, the first compound may be included in an amount of 0.05 to 3.0 parts by weight, for example, 0.05 to 2.0 parts by weight, 0.1 to 2.0 parts by weight, or 0.1 to 1.0 parts by weight, based on 100 parts by weight of the electrolyte for the rechargeable lithium battery.

For example, the second compound may be represented by any one of Chemical Formulas 1-1 to 1-4.

[Chemical Formula 1-1] [Chemical Formula 1-2]

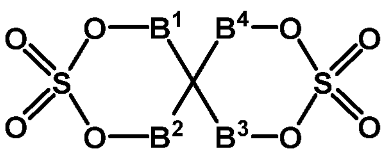 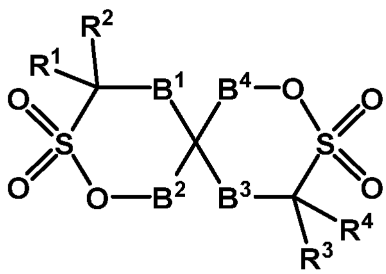

[Chemical Formula 1-3] [Chemical Formula 1-4]

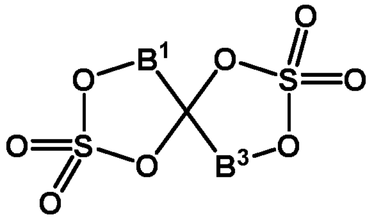 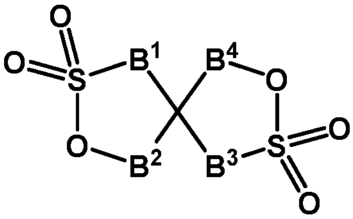

In Chemical Formulas 1-1 to 1-4,

$B^1$ to $B^4$ and $R^1$ to $R^4$ are the same as described above.

As a specific example, the second compound may be represented by any one of Chemical Formulas 1A to 1D.

[Chemical Formula 1A] [Chemical Formula 1B]

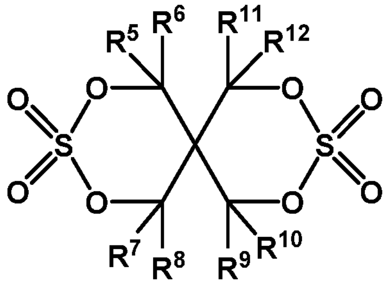

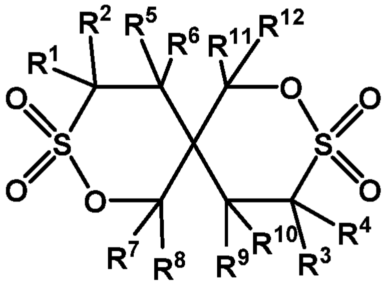

[Chemical Formula 1C] [Chemical Formula 1D]

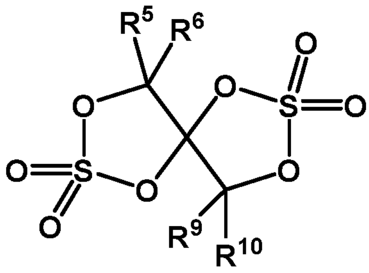

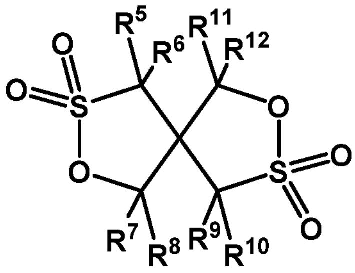

In Chemical Formulas 1A to 1D,
$R^5$ to $R^{12}$ are the same as described above.

As a more specific example, the second compound may be represented by Chemical Formula 1A or 1D.
In an example embodiment, $R^1$ to $R^{12}$ in Chemical Formula 1 may each independently be hydrogen, a halogen, a substituted or unsubstituted C1 to C20 alkyl group, a substituted or unsubstituted C6 to C30 aryl group, or a substituted or unsubstituted C2 to C30 heterocyclic group.
In a specific example embodiment, $R^1$ to $R^{12}$ in Chemical Formula 1 may each independently be hydrogen, a halogen, a methyl group, an ethyl group, a propyl group, an isopropyl group, a butyl group, a tert-butyl group, a trifluoromethyl group, a tetrafluoroethyl group, a substituted or unsubstituted phenyl group, a substituted or unsubstituted naphthyl group, a substituted or unsubstituted pyrrolyl group, or a substituted or unsubstituted pyridinyl group.
For example, the second compound may be any one selected from the compounds listed in Group 1.

[Group 1]

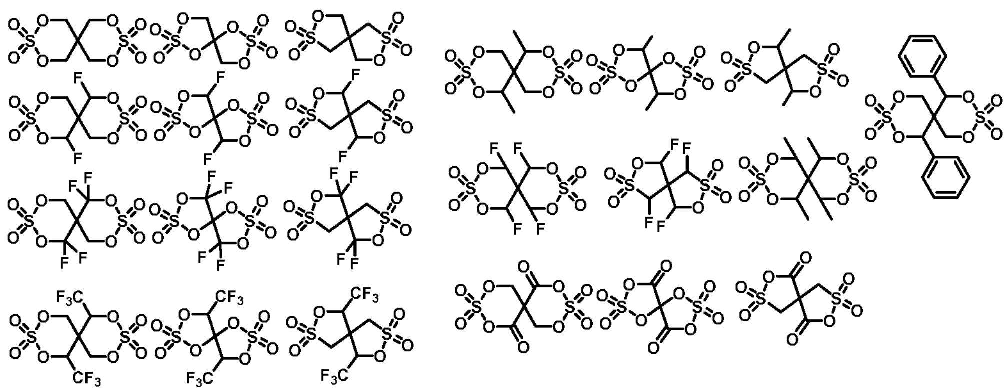

For example, the second compound may be included in an amount of 0.1 to 10.0 parts by weight, for example, 0.1 to 8.0 parts by weight, 0.1 to 6.0 parts by weight, 0.1 to 5.0 parts by weight, or 0.2 to 4.0 parts by weight, parts by weight, 0.2 to 3.0 parts by weight, 0.3 to 3.0 parts by weight, or 0.5 to 3.0 parts by weight based on 100 parts by weight of the electrolyte for the rechargeable lithium battery.

For example, the composition may include the first compound and the second compound in a weight ratio of 1:1 to 1:50.

As a specific example, the composition may include the first compound and the second compound in a weight ratio of 1:1 to 1:25, 1:1 to 1:20, or 1:1 to 1:15.

For example, the composition may include the first compound and the second compound in a weight ratio of 1:2 to 1:15.

In an embodiment, the composition may include the first compound and the second compound in a weight ratio of 1:2.5, 1:5.0, or 1:15.

When the mixing ratio of the first compound and the second compound is as described above, improvement of resistance increase suppression and output characteristics may be maximized.

The composition may be included in an amount of 0.2 to 10.0 parts by weight, for example, 0.2 to 8.0 parts by weight, 0.2 to 6.0 parts by weight, 0.2 to 5.0 parts by weight, or 0.5 to 5.0 parts by weight, based on 100 parts by weight of the electrolyte for the rechargeable lithium battery. there is.

When the content of the composition and the content of each component in the composition are within the above ranges, a rechargeable lithium battery having improved resistance characteristics during high-temperature storage and improved cycle-life characteristics at room temperature and high temperature may be implemented.

The non-aqueous organic solvent serves as a medium for transmitting ions taking part in the electrochemical reaction of a battery.

The non-aqueous organic solvent may be a carbonate-based, ester-based, ether-based, ketone-based, alcohol-based, or aprotic solvent.

The carbonate-based solvent may be dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylene carbonate (BC), and the like. The ester-based solvent may be methyl acetate, ethyl acetate, n-propyl acetate, t-butyl acetate, methyl propionate, ethyl propionate, propyl propionate, decanolide, mevalonolactone, caprolactone, and the like. The ether-based solvent may be dibutyl ether, tetraglyme, diglyme, dimethoxyethane, 2-methyltetrahydrofuran, tetrahydrofuran, and the like. In addition, the ketone-based solvent may be cyclohexanone, and the like. The alcohol-based solvent may include ethanol, isopropyl alcohol, and the like, and the aprotic solvent may include nitriles such as $R^{18}$-CN (wherein $R^{18}$ is a hydrocarbon group having a C2 to C20 linear, branched, or cyclic structure and may include a double bond, an aromatic ring, or an ether bond), and the like, amides such as dimethyl formamide, and the like, dioxolanes such as 1,3-dioxolane, and the like, sulfolanes, and the like.

The non-aqueous organic solvent may be used alone or in a mixture, and when used in a mixture, the mixing ratio may be appropriately adjusted in accordance with a desired battery performance, which is widely understood by those skilled in the art.

The carbonate-based solvent is prepared by mixing a cyclic carbonate and a chain carbonate. When the cyclic carbonate and chain carbonate are mixed together in a volume ratio of 1:9 to 9:1, a performance of the electrolyte may be improved.

In particular, in an embodiment, the non-aqueous organic solvent may include the cyclic carbonate and the chain carbonate in a volume ratio of 2:8 to 5:5, and as a specific example, the cyclic carbonate and the chain carbonate may be included in a volume ratio of 2:8 to 4:6.

More specifically, the cyclic carbonate and the chain carbonate may be included in a volume ratio of 2:8 to 3:7.

The non-aqueous organic solvent may further include an aromatic hydrocarbon-based organic solvent in addition to the carbonate-based solvent. Herein, the carbonate-based solvent and the aromatic hydrocarbon-based organic solvent may be mixed in a volume ratio of 1:1 to 30:1.

The aromatic hydrocarbon-based organic solvent may be an aromatic hydrocarbon-based compound of Chemical Formula 4.

[Chemical Formula 4]

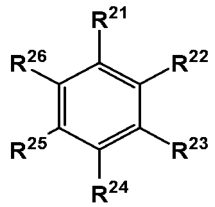

In Chemical Formula 4, $R^{21}$ to $R^{26}$ are the same or different and are hydrogen, a halogen, a C1 to C10 alkyl group, a haloalkyl group, or a combination thereof.

Specific examples of the aromatic hydrocarbon-based organic solvent may be benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The electrolyte may further include vinylene carbonate, vinyl ethylene carbonate, or an ethylene carbonate-based compound represented by Chemical Formula 5 as an additive to improve cycle-life of a battery.

[Chemical Formula 5]

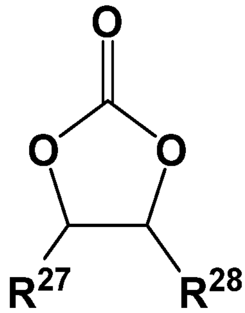

In Chemical Formula 5, $R^{27}$ and $R^{28}$ are the same or different, and are selected from hydrogen, a halogen, a cyano group (CN), a nitro group ($NO_2$), and a fluorinated C1 to C5 alkyl group, provided that one or more of $R^{27}$ and $R^{28}$ is selected from a halogen, a cyano group (CN), a nitro group ($NO_2$), and a fluorinated C1 to C5 alkyl group, and both $R^{27}$ and $R^{28}$ are not hydrogen.

Examples of the ethylene carbonate-based compound may include difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. When such an additive for improving cycle-life is further used, its amount may be appropriately adjusted.

The lithium salt dissolved in the non-organic solvent supplies lithium ions in a battery, enables a basic operation of a rechargeable lithium battery, and improves transportation of the lithium ions between positive and negative electrodes. Examples of the lithium salt may include one or more selected from $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $Li(FSO_2)_2N$ (lithium bis(fluorosulfonyl)imide: LiFSI), $LiC_4F_9SO_3$, $LiClO_4$, $LiAlO_2$, $LiAlCl_4$, $LiPO_2F_2$, $LiN(C_xF_{2x+1}SO_2)(C_yF_{2y+1}SO_2)$ (wherein x and y are natural numbers, for example an integer of 1 to 20), LiCl, LiI, $LiB(C_2O_4)_2$ (lithium bis(oxalato) borate: LiBOB), LiDFOB (lithium difluoro(oxalato)borate), and $Li[PF_2(C_2O_4)_2]$ (lithium difluoro (bis oxalato) phosphate). The lithium salt may be used in a concentration ranging from 0.1 M to 2.0 M. When the lithium salt is included at the above concentration range, an electrolyte may have excellent performance and lithium ion mobility due to optimal electrolyte conductivity and viscosity.

The positive electrode includes a positive electrode current collector and a positive electrode active material layer on the positive electrode current collector, and the positive electrode active material layer includes a positive electrode active material.

The positive electrode active material may include lithiated intercalation compounds that reversibly intercalate

and deintercalate lithium ions.

Specifically, one or more composite oxide of a metal selected from cobalt, manganese, nickel, and a combination thereof and lithium may be used.

Of course, the composite oxide in which a portion of the metal is substituted with a metal other than another metal may be used, and a phosphate compound of the composite oxide, for example, one or more selected $LiFePO_4$, $LiCoPO_4$, and $LiMnPO_4$ may be used. The lithium composite oxide may have a coating layer on the surface, or the lithium composite oxide may be mixed with another composite oxide having a coating layer. The coating layer may include one or more coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating process may include any conventional processes as long as it does not cause any side effects on the properties of the positive electrode active material (e.g., inkjet coating, dipping), which is well known to persons having ordinary skill in this art, so a detailed description thereof is omitted.

The positive electrode active material may be, for example, one or more lithium composite oxides represented by Chemical Formula 6.

[Chemical Formula 6] $Li_xM^1_yM^2_zM^3_{1-y-z}O_{2-a}X_a$

In Chemical Formula 6,
$0.5 \le x \le 1.8$, $0 \le a \le 0.05$, $0 < y \le 1$, $0 \le z \le 1$, $0 \le y+z \le 1$, $M^1$, $M^2$, and $M^3$ each independently include one or more element selected from a metal such as Ni, Co, Mn, Al, B, Ba, Ca, Ce, Cr, Fe, Mo, Nb, Si, Sr, Mg, Ti, V, W, Zr, or La, and a combination thereof, and X include one or more element selected from F, S, P, and Cl.

In an embodiment, the positive electrode active material may be one or more selected from $LiCoO_2$, $LiNiO_2$, $LiMnO_2$, $LiMn_2O_4$, $LiNi_aMn_bCo_cO_2$ (a+b+c=1), $LiNi_aMn_bCo_cAl_dO_2$ (a+b+c+d=1), and $LiNi_eCo_fAl_gO_2$ (e+f+g=1).

In Chemical Formula 6, $0.8 \le y \le 1$, $0 \le z \le 0.2$, and $M^1$ may be Ni.

For example, the positive electrode active material selected from $LiNi_aMn_bCo_cO_2$ (a+b+c=1), $LiNi_aMn_bCo_cAl_dO_2$ (a+b+c+d=1), and $LiNi_eCo_fAl_gO_2$ (e+f+g=1) may be a high Ni-based positive electrode active material.

For example, in the case of $LiNi_aMn_bCo_cO_2$ (a+b+c=1) and $LiNi_aMn_bCo_cAl_dO_2$ (a+b+c+d=1), the nickel content may be greater than or equal to 60% ($a \ge 0.6$), and more specifically, greater than or equal to 80% ($a \ge 0.8$).

For example, in the case of $LiNi_eCo_fAl_gO_2$ (e+f+g=1), the nickel content may be greater than or equal to 60% ($e \ge 0.6$), and more specifically, greater than or equal to 80% ($e \ge 0.8$).

A content of the positive electrode active material may be 90 wt% to 98 wt% based on the total weight of the positive electrode active material layer.

In an embodiment of the present invention, the positive electrode active material layer may optionally include a conductive material and a binder. In this case, a content of the conductive material and the binder may be 1 wt% to 5 wt%, respectively, based on the total weight of the positive electrode active material layer.

The conductive material is included to impart conductivity to the positive electrode and any electrically conductive material may be used as a conductive material unless it causes a chemical change in the configured battery. Examples of the conductive material may include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The binder plays a role of improving binding properties of positive electrode active material particles with one another and also, the positive electrode active material with a current collector, and examples thereof may include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like but is not limited thereto.

The positive electrode current collector may include Al, but is not limited thereto.

The negative electrode includes a negative electrode current collector and a negative electrode active material layer including a negative electrode active material formed on the negative electrode current collector.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions includes carbon materials. The carbon material may be any generally-used carbon-based negative electrode active material in a rechargeable lithium battery and

examples of the carbon material include crystalline carbon, amorphous carbon, and a combination thereof. The crystalline carbon may be non-shaped, or sheet, flake, spherical, or fiber shaped natural graphite or artificial graphite and the amorphous carbon may be a soft carbon, a hard carbon, a mesophase pitch carbonization product, calcined coke, and the like.

The lithium metal alloy may include lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be Si, Si-C composite, $SiO_x$ ($0 < x < 2$), a Si-Q alloy wherein Q is an element selected from an alkali metal, an alkaline-earth metal, a Group 13 element, a Group 14 element, a Group 15 element, a Group 16 element, a transition metal, a rare earth element, and a combination thereof, but not Si), Sn, $SnO_2$, a Sn-$R^{61}$ alloy (wherein $R^{61}$ is an element selected from an alkali metal, an alkaline-earth metal, a Group 13 element, a Group 14 element, a Group 15 element, a Group 16 element, a transition metal, a rare earth element, and a combination thereof, but not Sn), and the like. One or more of these materials may be mixed with $SiO_2$.

The elements Q and $R^{61}$ may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The transition metal oxide may be a vanadium oxide, a lithium vanadium oxide, and the like.

In a specific embodiment, the negative electrode active material may be graphite or may include a Si composite and graphite together.

When the negative electrode active material includes the Si composite and graphite together, the Si composite and graphite may be included in the form of a mixture, and the Si composite and graphite may be included in a weight ratio of 1:99 to 50:50. More specifically, the Si composite and graphite may be included in a weight ratio of 3: 97 to 20: 80 or 5: 95 to 20: 80.

The Si composite may include a core including Si-based particles and an amorphous carbon coating layer. For example, the Si-based particles may include a Si-C composite, SiOx ($0 < x \leq 2$), a Si alloy or a mixture thereof. For example, the Si-C composite may include a core including Si particles and crystalline carbon, and an amorphous carbon coating layer on the surface of the core.

The crystalline carbon may include, for example, graphite, and more specifically, natural graphite, artificial graphite, or a mixture thereof.

An average particle diameter of the crystalline carbon may be 5 $\mu$m to 30 $\mu$m.

In the present specification, an average particle diameter may be a particle size (D50) at a volume ratio of 50% in a cumulative size-distribution curve.

In the Si-C composite, an average particle diameter of the Si particles may be 50 nm to 200 nm.

When the average particle diameter of the Si particles is within the above ranges, volume expansion occurring during charging and discharging may be suppressed, and interruption of a conductive path due to particle crushing during charging and discharging may be prevented.

The Si particles may be included in an amount of 1 wt% to 60 wt%, for example, 3 wt% to 60 wt%, based on the total weight of the Si-C composite.

The amorphous carbon may include soft carbon, hard carbon, a mesophase pitch carbonized product, calcined coke, or a mixture thereof.

The amorphous carbon may be included in an amount of 1 part by weight to 50 parts by weight, for example, 5 parts by weight to 50 parts by weight, or 10 parts by weight to 50 parts by weight based on 100 parts by weight of the crystalline carbon.

In the negative electrode active material layer, the negative electrode active material may be included in an amount of 95 wt% to 99 wt% based on the total weight of the negative electrode active material layer.

In an embodiment, the negative electrode active material layer may include a binder, and optionally a conductive material. The content of the binder in the negative electrode active material layer may be 1 wt% to 5 wt% based on the total weight of the negative electrode active material layer. In addition, when the conductive material is further included, 90 wt% to 98 wt% of the negative electrode active material, 1 wt% to 5 wt% of the binder, and 1 wt% to 5 wt% of the conductive material may be used.

The binder improves binding properties of negative electrode active material particles with one another and with a current collector. The binder may be a non-water-soluble binder, a water-soluble binder, or a combination thereof.

The non-water-soluble binder may be polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and a combination thereof. The polymer resin binder may be selected from polytetrafluoroethylene, ethylenepropyleneco polymer, polyethylene oxide, polyvinylpyrrolidone,

polyepichlorohydrine, polyphosphazene, polyacrylonitrile, polystyrene, an ethylene propylene diene copolymer, polyvinylpyridine, chlorosulfonated polyethylene, latex, a polyester resin, an acrylic resin, a phenolic resin, an epoxy resin, polyvinyl alcohol, or a combination thereof.

When the water-soluble binder is used as a negative electrode binder, a cellulose-based compound may be further used to provide viscosity as a thickener. The cellulose-based compound includes one or more of carboxymethyl cellulose, hydroxypropylmethyl cellulose, methyl cellulose, or alkali metal salts thereof. The alkali metals may be Na, K, or Li. Such a thickener may be included in an amount of 0.1 parts by weight to 3 parts by weight based on 100 parts by weight of the negative electrode active material.

The conductive material is included to improve electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The negative electrode current collector may be selected from a copper foil, a nickel foil, a stainless-steel foil, a titanium foil, a nickel foam, a copper foam, a polymer substrate coated with a conductive metal, and a combination thereof.

The rechargeable lithium battery may further include a separator between the negative electrode and the positive electrode, depending on a type of the battery. Such a separator may be a porous substrate or a composite porous substrate.

The porous substrate may be a substrate including pores, and lithium ions may move through the pores. The porous substrate may for example include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The composite porous substrate may have a form including a porous substrate and a functional layer on the porous substrate. The functional layer may be, for example, One or more of a heat-resistant layer and an adhesive layer from the view point of enabling additional function. For example, the heat-resistant layer may include a heat-resistant resin and optionally a filler.

In addition, the adhesive layer may include an adhesive resin and optionally a filler.

The filler may be an organic filler or an inorganic filler.

## DETAILED DESCRIPTION OF THE EMBODIMENTS

Hereinafter, examples of the present invention and comparative examples are described. These examples, however, are not in any sense to be interpreted as limiting the scope of the invention.

### Synthesis of Additives

### Preparation Example 1: Synthesis of Compound Represented by Chemical

### Formula 1-a

[Reaction Scheme 1]

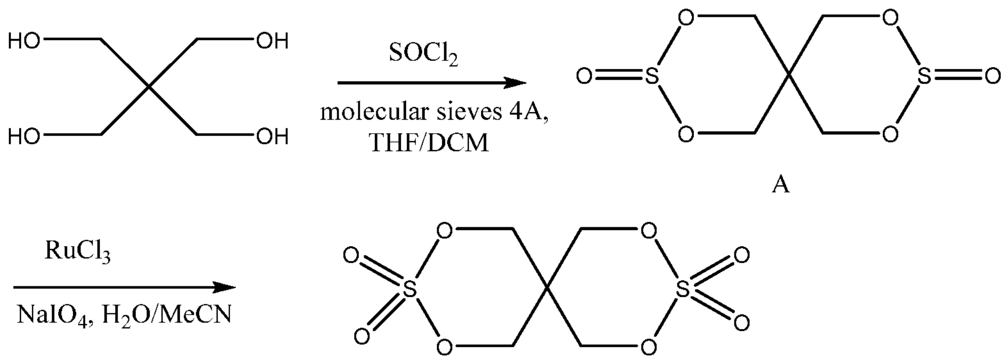


1st step: Synthesis of Intermediate A

68.0 g (0.499 mol) of pentaerythritol and 100 g of a molecular sieve (Type 4A) were added to a mixed solvent of tetrahydrofuran (THF) and dichloromethane (DCM, $CH_2Cl_2$) prepared in a volume ratio of 1:1 and then, refluxed for 20 minutes. Subsequently, 110 ml (2.8 equiv., 1.40 mol) of chloridethionyl ($SOCl_2$) was added thereto and then, refluxed for 8 hours, until the pentaerythritol all reacted, obtaining a light-yellow solution. The obtained light-yellow solution was filtered and concentrated, obtaining a residue including a light-yellow solid. Subsequently, 1 L of a saturated sodium bicarbonate (saturated NaHCOs) solution was directly added to the obtained residue at a rate of minimizing effervescence. The resulting suspension was vigorously stirred for 20 minutes. Subsequently, the suspension was filtered, and a solid filtered therefrom was added to 1 L of purified water, preparing a mixture. The prepared mixture was vigorously stirred for 20 minutes, filtered under a reduced pressure (suction filtration), and dried in the air to recover 104.61 g of Compound A (0.458 mol, Yield: 92%).

1H and 13C NMR data of Compound A were consistent with literature values.

2nd step: Synthesis of Compound Represented by Chemical Formula 1-a

As shown in Reaction Scheme 1, a compound represented by Chemical Formula 1-a was synthesized from Intermediate A in a method disclosed in Canadian Journal of Chemistry, 79, 2001, Page 1042.

The synthesized compound was recrystallized in a mixed solvent of 1,2-dichloroethane and acetonitrile mixed in a volume ratio of 2:1, obtaining a target compound.

**Preparation Example** 2: **Synthesis of Compound Represented by Chemical** Formula 1-b

[Reaction Scheme 2]

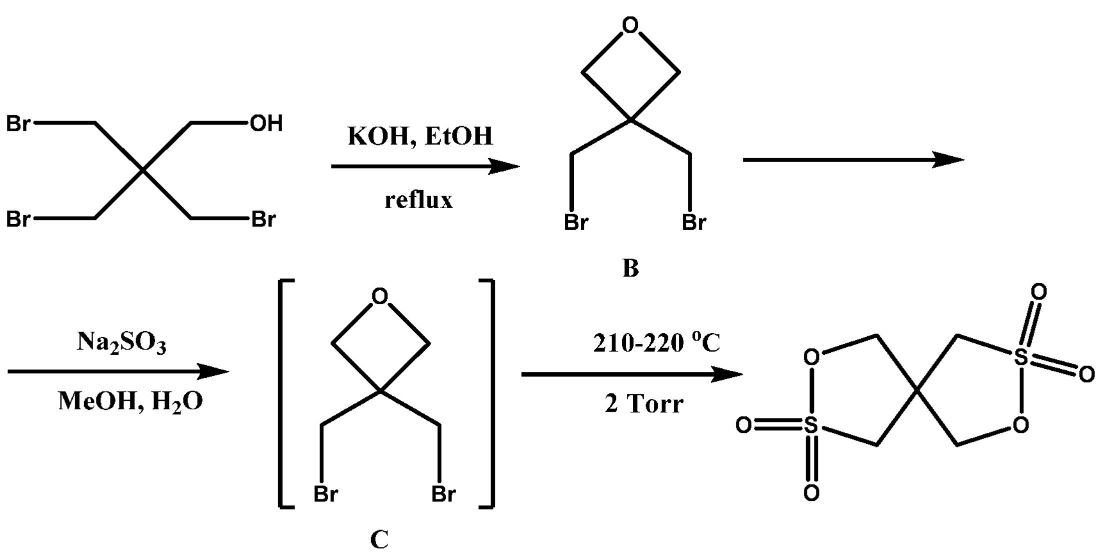

1st step: Synthesis of Intermediate B

50 g (0.154 mole) of pentaerythritol tribromide was added in a dropwise fashion to a solution prepared by dissolving 10.34 g (0.156 mol) of KOH in 200 ml of ethanol and then, reacted by refluxing for 0.5 hour. After cooling the resultant to room temperature with KBr, a residue obtained by evaporating the ethanol was distilled, obtaining 28 g (0.115 mol) of Intermediate B (3,3-bis(bromomethyl) oxacyclobutane).

2nd step: Synthesis of Intermediate C

28 g (0.115 mol) of Intermediate B (3,3-bis(bromomethyl) oxacyclobutane) was dissolved in a solution prepared by dissolving 28 ml of water in 94 ml of methanol and then, added in a dropwise fashion to a solution of 44.8 g (0.358 mol) of $Na_2SO_3$ dissolved in 252 ml of water. The mixed solution was refluxed for 3.5 hours, and the solvent was removed therefrom through vacuum in a mixed solution including Intermediate C, NaBr, and $Na_2SO_3$. The mixture from which the solvent was removed was treated with HCl at room temperature and then, filtered with NaCl.

3rd step: Synthesis of Compound Represented by Chemical Formula 1-b

Oil remaining after evaporating a solution of sulfonic acid under vacuum was heated at 210 to 220° C for 2 hours under a pressure of 2 mm. The remaining material was refluxed with acetone, cooled to room temperature, and filtered. After extracting the remaining solid with ethyl acetate in a Soxlet apparatus, an ethyl acetate suspension containing the compound represented by Chemical Formula 1-b was cooled to room temperature and then, filtered (Yield: 10 g).

**Manufacture of Rechargeable Lithium Battery Cells**

**Comparative Example 1**

$LiNi_{0.88}Co_{0.07}Al_{0.05}O_2$ as a positive electrode active material, polyvinylidene fluoride as a binder, and ketjen black as a conductive material were mixed in a weight ratio of 97:2:1 and then, dispersed in N-methyl pyrrolidone, preparing positive electrode active material slurry.

The positive electrode active material slurry was coated on a 14 μm-thick Al foil, dried at 110 °C, and pressed, manufacturing a positive electrode.

A negative electrode active material prepared by mixing artificial graphite and an Si-C composite in a weight ratio of 93:7, a styrene-butadiene rubber binder as a binder, and carboxylmethyl cellulose as a thickener were mixed in a weight ratio of 97:1:2 and then, dispersed in distilled water, preparing negative electrode active material slurry.

The Si-C composite included a core including artificial graphite and silicon particles and coal-based pitch coated on the surface of the core.

The negative electrode active material slurry was coated on a 10 μm-thick Cu and then, dried at 100 °C and pressed, manufacturing a negative electrode.

The positive electrode and the negative electrode were assembled with a 25 μm-thick polyethylene separator to manufacture an electrode assembly, and an electrolyte was injected thereinto, manufacturing a rechargeable lithium battery cell.

The electrolyte had a composition as follows.

(Composition of the electrolyte)

Salt: 1.15 M $LiPF_6$
Solvent: ethylene carbonate: ethylmethyl carbonate: dimethyl carbonate (EC: EMC:DMC= a volume ratio of 20:10:70)

**Comparative Example 2**

A rechargeable lithium battery cell was manufactured in the same manner as in Comparative Example 1, except that 0.2 parts by weight of cesium hexafluorophosphate was added to the electrolyte.

(However, in the composition of the electrolyte, "parts by weight" means a relative weight of additives based on 100 weight of the total electrolyte (lithium salt + non-aqueous organic solvent).)

**Comparative Example 3**

A rechargeable lithium battery cell was manufactured in the same manner as in Comparative Example 1, except that 3.0 parts by weight of the compound represented by Chemical Formula 1-a was added to the electrolyte.

[Chemical Formula 1-a]

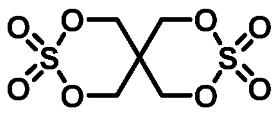

**Comparative Example 4**

A rechargeable lithium battery cell was manufactured in the same manner as in Comparative Example 1, except that 3.0 parts by weight of the compound represented by Chemical Formula 1-b was added to the electrolyte.

[Chemical Formula 1-b]

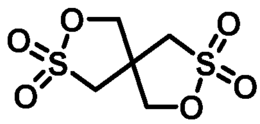

**Comparative Example 5**

A rechargeable lithium battery cell was manufactured in the same manner as in Comparative Example 1, except that 3.0 parts by weight of ethylene sulfate was added to the electrolyte.

**Comparative Example 6**

A rechargeable lithium battery cell was manufactured in the same manner as in Comparative Example 1, except that a composition including 0.2 parts by weight of cesium hexafluorophosphate and 3.0 parts by weight of 1,3-propanesultone were added to the electrolyte.

**Comparative Example 7**

A rechargeable lithium battery cell was manufactured in the same manner as in Comparative Example 1, except that a composition including 0.2 parts by weight of $LiPO_2F_2$ and 3.0 parts by weight of the compound represented by Chemical Formula 1-a were added to the electrolyte.

**Example 1**

A rechargeable lithium battery cell was manufactured in the same manner as in Comparative Example 1, except that a composition including 0.2 parts by weight of cesium hexafluorophosphate and 0.5 parts by weight of the second compound represented by Chemical Formula 1-a were added to the electrolyte.

**Examples 2 to 3**

Rechargeable lithium battery cells were manufactured in the same manner as in Example 1, except for changing the compositions shown in Table 1.

Compositions according to Examples and Comparative Examples are shown together in Table 1.

(Table 1)

| | Additive composition | |
|---|---|---|
| | First compound (parts by weight) | Second compound (parts by weight) |
| Comparative Example 1 | - | - |
| Comparative Example 2 | $CsPF_6$ (0.2) | - |
| Comparative Example 3 | - | Chemical Formula 1-a (3.0) |
| Comparative Example 4 | - | Chemical Formula 1-b (3.0) |
| Comparative Example 5 | - | ES (3.0) |
| Comparative Example 6 | $CsPF_6$ (0.2) | PS (3.0) |
| Comparative Example 7 | $LiPO_2F_2$ (0.2) | Chemical Formula 1-a (3.0) |
| Example 1 | $CsPF_6$ (0.2) | Chemical Formula 1-a (0.5) |
| Example 2 | $CsPF_6$ (0.2) | Chemical Formula 1-a (1.0) |
| Example 3 | $CsPF_6$ (0.2) | Chemical Formula 1-a (3.0) |
| ES: Ethylene sulfate<br>PS: 1,3-Propane sultone | | |

**Evaluation 1: Evaluation of DC Resistance Increase Rate after High-temperature Storage**

The rechargeable lithium battery cells according to Examples 1 to 3 and Comparative Examples 1 to 7 were measured with respect to initial DC resistance (DCIR) as △V/△I (change in voltage / change in current), and after changing a maximum energy state inside the battery cells into a full charge state (SOC 100%) and storing the cells in this state at a high temperature (60 °C) for 30 days, the cells was measured with respect to DC resistance to calculate a DCIR increase rate (%) according to Equation 1, and the results are shown in Table 2.

[Equation 1]

$$\text{DCIR increase rate} = \{(\text{DCIR after 30 days} - \text{Initial DCIR}) / \text{Initial DCIR}\} \times 100\ (\%)$$

**Evaluation 2: Evaluation of Room-temperature Cycle-life Characteristics**

The rechargeable lithium battery cells according to Examples 1 to 3 and Comparative Examples 1 to 7 were once charged and discharged at 0.2 C and then, measured with respect to charge and discharge capacity (initial capacity).

The rechargeable lithium battery cells according to Examples 1 to 3 and Comparative Examples 1 to 7 were 100 cycles charged and discharged within 2.75 V to 4.2 V at a C-rate of 0.5 C at room temperature (25 °C) and then, measured with respect to a change in the discharge capacity (capacity retention rate) to calculate 100 cycles' discharge capacity to the initial capacity (capacity retention (%)), and the results are shown in Table 2.

In addition, the cells were recharged to 4.2 V at 0.2 C under a constant current and a constant voltage, cut off at 0.05 C, and discharged to 3.0 V at 0.2 C under the constant current and then, measured with respect to discharge capacity. The charge and discharge characteristics at this time were called to be recovery characteristics. Herein, charge and discharge capacities were measured to calculate a ratio of discharge capacity to the initial capacity, and the results are shown as capacity recovery rate (%) in Table 2.

(Table 2)

| | Initial DC resistance (mΩ) | DC resistance after storage at high temperature (60 °C) for 30 days (mΩ) | DC resistance Increase rate (%) | Capacity retention Rate (%) | Capacity recovery rate (%) |
|---|---|---|---|---|---|
| Comparative Example 1 | 35.0 | 40.5 | 15.7 | 88.2 | 95.0 |
| Comparative Example 2 | 31.0 | 32.3 | 4.2 | 88.7 | 96.8 |
| Comparative Example 3 | 30.7 | 32.7 | 6.5 | 88.0 | 96.1 |
| Comparative Example 4 | 30.8 | 33.4 | 8.4 | 87.9 | 96.0 |
| Comparative Example 5 | 31.3 | 33.5 | 7.0 | 87.7 | 95.7 |
| Comparative Example 6 | 30.2 | 32.4 | 7.3 | 89.1 | 95.8 |
| Comparative Example 7 | 30.7 | 32.7 | 6.5 | 88.9 | 95.9 |
| Example 1 | 30.5 | 31.6 | 3.6 | 89.7 | 97.2 |
| Example 2 | 29.9 | 30.9 | 3.3 | 89.9 | 97.3 |
| Example 3 | 28.6 | 29.4 | 2.8 | 90.2 | 97.8 |

Referring to Table 2, the rechargeable lithium battery cells using a specific mixing combination composition according to the present embodiment as an additive turned out to realize excellent cycle-life characteristics as well as suppress the resistance increase during the high-temperature storage. Although the preferred embodiments of the present invention have been described above, the present invention is not limited thereto, and it is possible to carry out various modifications within the scope of the claims and the detailed description of the invention and the accompanying drawings, and these may also fall within the scope of the invention.

## Claims

**1.** An electrolyte for a rechargeable lithium battery, comprising

a non-aqueous organic solvent,
a lithium salt, and
an additive,
wherein the additive includes a composition including a first compound and a second compound,
the first compound is a cesium salt compound and the second compound is represented by Chemical Formula 1:

[Chemical Formula 1]

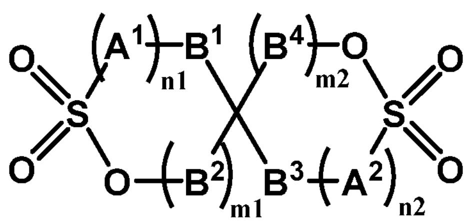

wherein, in Chemical Formula 1,

$A^1$ is O or $C(R^1)(R^2)$,
$A^2$ is O or $C(R^3)(R^4)$,
$B^1$ is $C(R^5)(R^6)$ or a carbonyl group,
$B^2$ is $C(R^7)(R^8)$ or a carbonyl group,
$B^3$ is $C(R^9)(R^{10})$ or a carbonyl group,
$B^4$ is $C(R^{11})(R^{12})$ or a carbonyl group,
$R^1$ to $R^{12}$ are each independently hydrogen, a halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C3 to C20 cycloalkynyl group, a substituted or unsubstituted C6 to C30 aryl group, or a substituted or unsubstituted C2 to C30 heterocyclic group,
n1, n2, m1, and m2 are each independently an integer of 0 or 1,
$n1 + m1 \geq 1$, and $n2 + m2 \geq 1$.

2. The electrolyte for the rechargeable lithium battery of claim 1, wherein
an anion of the cesium salt compound is an imide-based anion or a phosphate-based anion.

3. The electrolyte for the rechargeable lithium battery of claim 1, wherein

the cesium salt compound is represented by Chemical Formula 2 or 3:

[Chemical Formula 2] [Chemical Formula 3]

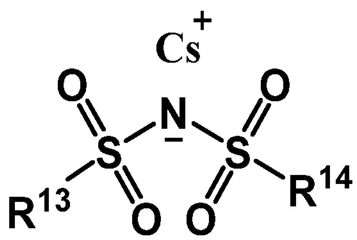

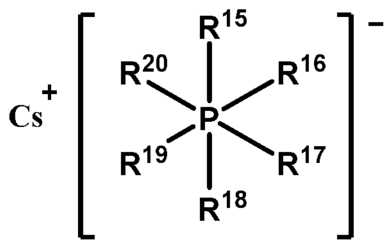

wherein, in Chemical Formulas 2 and 3,
$R^{13}$ to $R^{20}$ are each independently a fluoro group or a C1 to C4 fluoroalkyl group substituted with one or more fluoro group.

4. The electrolyte for the rechargeable lithium battery of claim 3, wherein
Chemical Formula 2 is represented by Chemical Formula 2-1 or 2-2:

[Chemical Formula 2-1] [Chemical Formula 2-2]

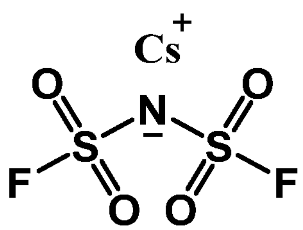

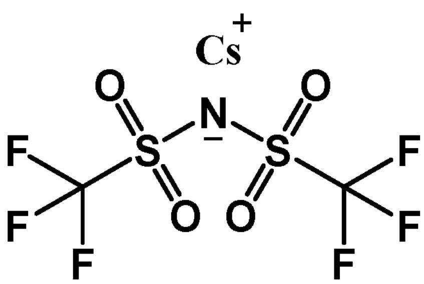
.

5. The electrolyte for the rechargeable lithium battery of claim 3, wherein
Chemical Formula 3 is represented by Chemical Formula 3-1:

[Chemical Formula 3-1]

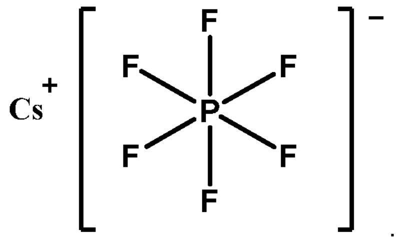

6. The electrolyte for the rechargeable lithium battery of claim 1, wherein the first compound is included in an amount of 0.05 to 3.0 parts by weight based on 100 parts by weight of the electrolyte for the rechargeable lithium battery.

7. The electrolyte for the rechargeable lithium battery of claim 1, wherein

the second compound is represented by any one of Chemical Formulas 1-1 to 1-4:

[Chemical Formula 1-1] [Chemical Formula 1-2]

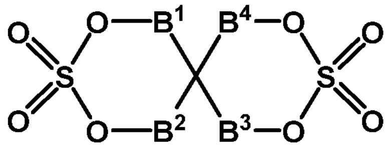

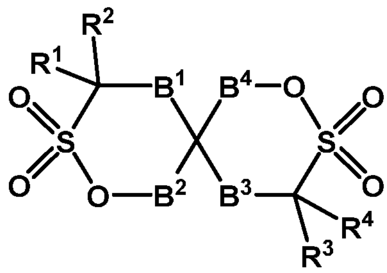

[Chemical Formula 1-3] [Chemical Formula 1-4]

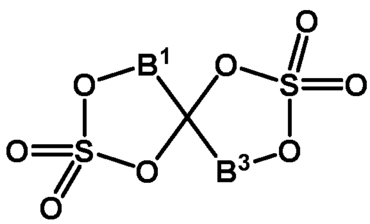

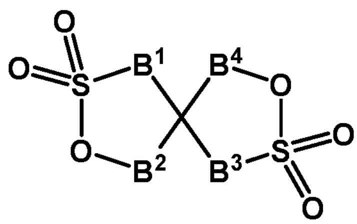

wherein, in Chemical Formulas 1-1 to 1-4,
$B^1$ to $B^4$ and $R^1$ to $R^4$ are the same as defined in claim 1.

8. The electrolyte for the rechargeable lithium battery of claim 1, wherein

the second compound is represented by any one of Chemical Formulas 1Ato 1D:

[Chemical Formula 1A] [Chemical Formula 1B]

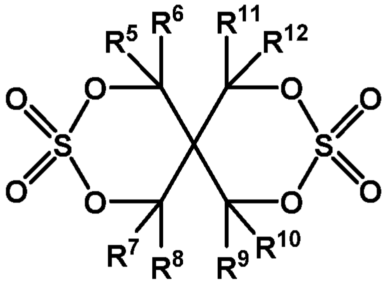
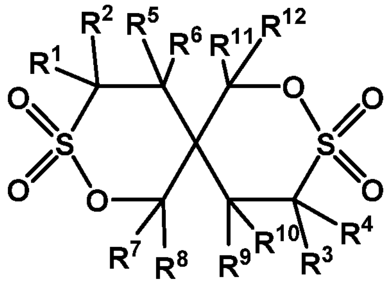

[Chemical Formula 1C] [Chemical Formula 1D]

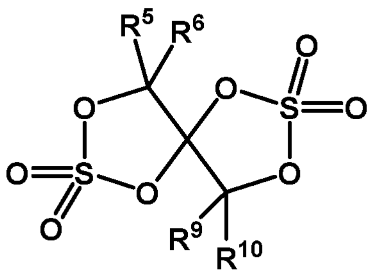
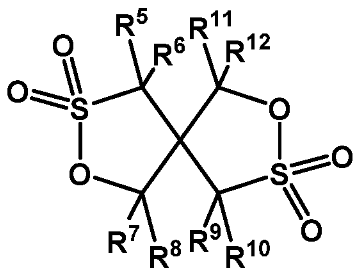

wherein, in Chemical Formulas 1A to 1D,
$R^5$ to $R^{12}$ are the same as defined in claim 1.

**9.** The electrolyte for the rechargeable lithium battery of claim 1, wherein
the second compound is any one selected from compounds listed in Group 1:

[Group 1]

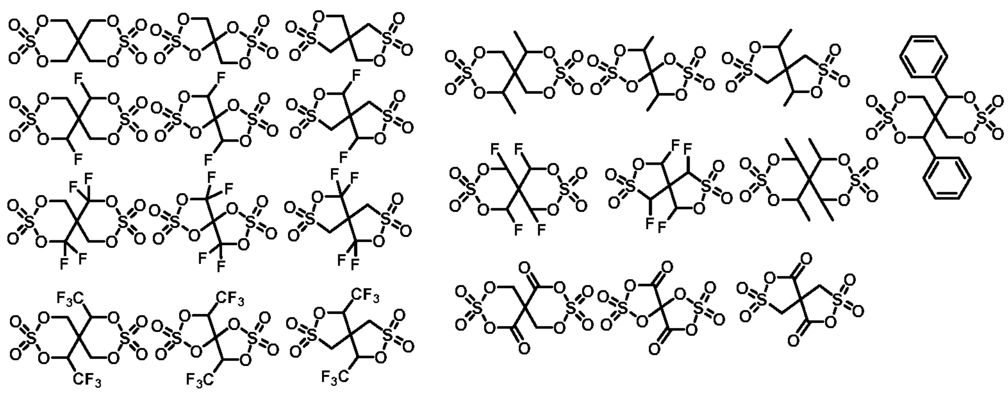

.

**10.** The electrolyte for the rechargeable lithium battery of claim 1, wherein
the second compound is included in an amount of 0.1 to 10.0 parts by weight based on 100 parts by weight of the electrolyte for the rechargeable lithium battery.

**11.** The electrolyte for the rechargeable lithium battery of claim 1, wherein
the composition includes the first compound and the second compound in a weight ratio of 1:1 to 1:50.

**12.** The electrolyte for the rechargeable lithium battery of claim 1, wherein

the composition includes the first compound and the second compound in a weight ratio of 1:1 to 1:20.

**13.** The electrolyte for the rechargeable lithium battery of claim 1, wherein
the composition is included in an amount of 0.2 to 10.0 parts by weight based on 100 parts by weight of the electrolyte for the rechargeable lithium battery.

**14.** A rechargeable lithium battery, comprising

a positive electrode including a positive electrode active material;
a negative electrode including a negative electrode active material; and
the electrolyte for the rechargeable lithium battery of any one of claim 1 to claim 13.

**15.** The rechargeable lithium battery of claim 14, wherein

the positive electrode active material is represented by Chemical Formula 6:

[Chemical Formula 6] $Li_xM^1_yM^2_zM^3_{1-y-z}O_{2-a}X_a$

wherein, in Chemical Formula 6,
$0.5 \leq x \leq 1.8$, $0 \leq a \leq 0.05$, $0 < y \leq 1$, $0 \leq z \leq 1$, $0 \leq y+z \leq 1$, $M^1$, $M^2$, and $M^3$ each independently include one or more element selected from a metal of Ni, Co, Mn, Al, B, Ba, Ca, Ce, Cr, Fe, Mo, Nb, Si, Sr, Mg, Ti, V, W, Zr, or La, and a combination thereof, and X include one or more element selected from F, S, P, and Cl.

**16.** The rechargeable lithium battery of claim 15, wherein

in Chemical Formula 6,
$0.8 \leq y \leq 1$, $0 \leq z \leq 0.2$, and $M^1$ is Ni.

**17.** The rechargeable lithium battery of claim 14, wherein
the negative electrode active material is graphite or includes a Si composite and graphite together.

**18.** The rechargeable lithium battery of claim 17, wherein
the Si composite include a core including Si-based particles and an amorphous carbon coating layer.

**19.** The rechargeable lithium battery of claim 18, wherein
the Si-based particle includes a Si-C composite, $SiO_x$ ($0 < x \leq 2$), a Si alloy or a mixture thereof.

**20.** The rechargeable lithium battery of claim 19, wherein

the Si-C composite includes a core including Si particles and crystalline carbon and an amorphous carbon coating layer on the surface of the core, and
an average particle diameter of the Si particles is 50 nm to 200 nm.

FIG. 1

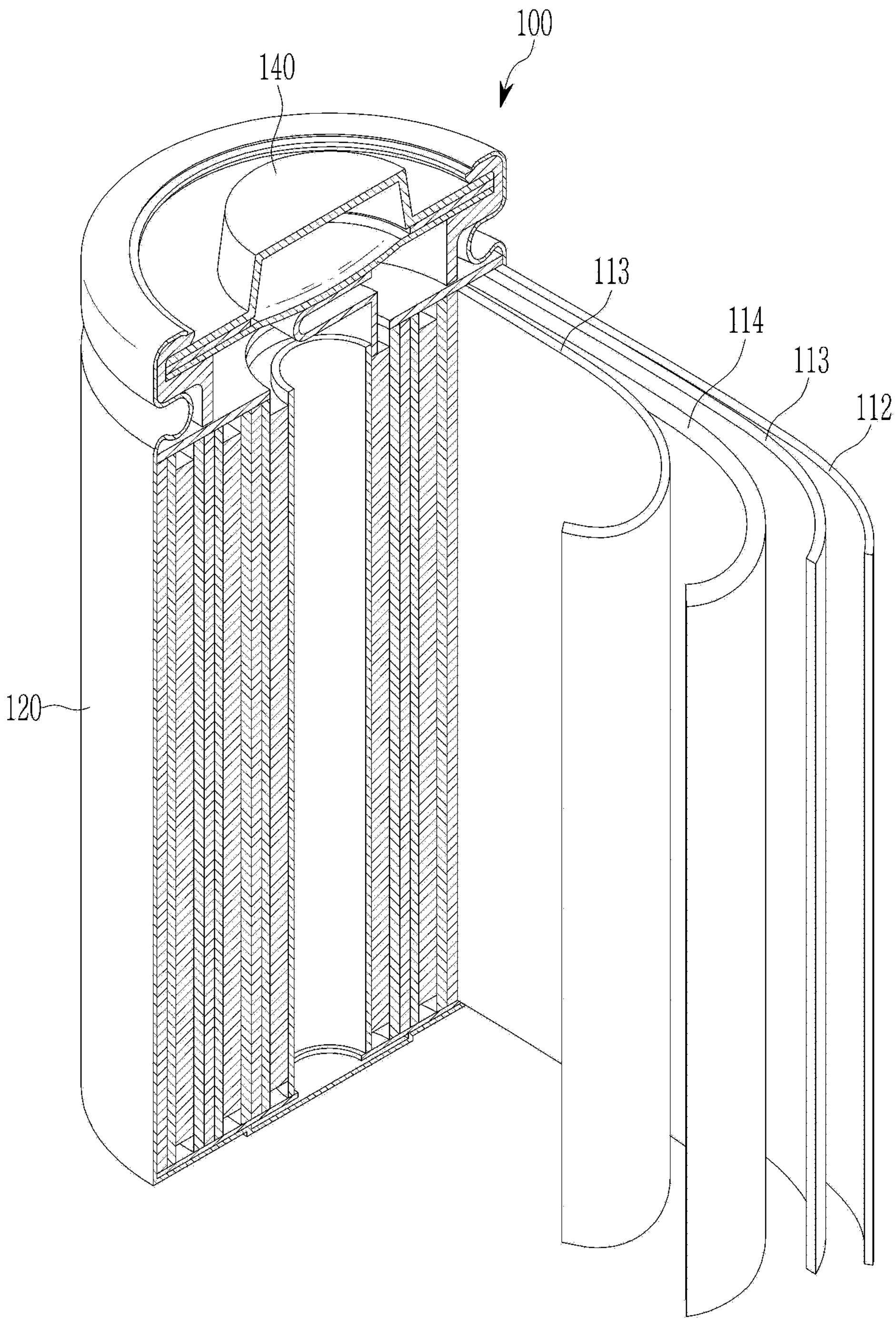

**INTERNATIONAL SEARCH REPORT**

International application No.
**PCT/KR2022/004549**

**A. CLASSIFICATION OF SUBJECT MATTER**

**H01M 10/0567**(2010.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 10/0567(2010.01); H01M 10/052(2010.01); H01M 10/0525(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 리튬 이차전지(lithium secondary battery), 전해액(electrolyte solution), 첨가제(additive), 세슘염 화합물(cesium salt compound), 바이사이클릭 설페이트계 화합물(bicyclic sulfate-based compound)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2020-0033204 A (SAMSUNG SDI CO., LTD.) 27 March 2020 (2020-03-27) See claims 1, 10, 11, 14, 15 and 18; and paragraphs [0145], [0146], [0183]-[0187] and [0327]. | 1-20 |
| Y | US 2020-0212486 A1 (BATTELLE MEMORIAL INSTITUTE) 02 July 2020 (2020-07-02) See paragraphs [0073], [0074], [0079], [0090] and [0091]. | 1-20 |
| Y | KR 10-2192087 B1 (SAMSUNG ELECTRONICS CO., LTD.) 16 December 2020 (2020-12-16) See claims 1 and 17; and paragraphs [0028] and [0094]. | 18-20 |
| Y | KR 10-2016-0144123 A (SK INNOVATION CO., LTD.) 16 December 2016 (2016-12-16) See claims 1, 2, 9, 11, 13 and 19; and paragraphs [0069], [0070] and [0153]-[0155]. | 1-4,6-8,9-14 |
| Y | KR 10-1980315 B1 (SOULBRAIN CO., LTD.) 20 May 2019 (2019-05-20) See claims 1, 10 and 15; and paragraphs [0018]-[0029], [0039], [0041], [0045] and [0063]-[0071]. | 1-4,6-8,9-14 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **30 June 2022** | **30 June 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.
**PCT/KR2022/004549**

| Patent document cited in search report | Publication date (day/month/year) | Patent family member(s) | Publication date (day/month/year) |
|---|---|---|---|
| KR 10-2020-0033204 A | 27 March 2020 | CN 107086324 A | 22 August 2017 |
| | | CN 107086324 B | 23 July 2021 |
| | | CN 110931853 A | 27 March 2020 |
| | | CN 110931854 A | 27 March 2020 |
| | | CN 110931855 A | 27 March 2020 |
| | | CN 110931856 A | 27 March 2020 |
| | | CN 110931857 A | 27 March 2020 |
| | | CN 110931858 A | 27 March 2020 |
| | | CN 110931859 A | 27 March 2020 |
| | | EP 3205655 A1 | 16 August 2017 |
| | | EP 3205655 B1 | 20 June 2018 |
| | | KR 10-2017-0094966 A | 22 August 2017 |
| | | KR 10-2020-0033198 A | 27 March 2020 |
| | | KR 10-2020-0033199 A | 27 March 2020 |
| | | KR 10-2020-0033200 A | 27 March 2020 |
| | | KR 10-2020-0033201 A | 27 March 2020 |
| | | KR 10-2020-0033202 A | 27 March 2020 |
| | | KR 10-2020-0033203 A | 27 March 2020 |
| | | KR 10-2152365 B1 | 04 September 2020 |
| | | KR 10-2332336 B1 | 29 November 2021 |
| | | US 1114694 B2 | 07 September 2021 |
| | | US 1127978 B2 | 21 September 2021 |
| | | US 1145900 B2 | 12 October 2021 |
| | | US 1223044 B2 | 11 January 2022 |
| | | US 1251432 B2 | 15 February 2022 |
| | | US 1264644 B2 | 01 March 2022 |
| | | US 1264645 B2 | 01 March 2022 |
| | | US 2017-0237126 A1 | 17 August 2017 |
| | | US 2019-0020064 A1 | 17 January 2019 |
| | | US 2019-0020065 A1 | 17 January 2019 |
| | | US 2019-0020066 A1 | 17 January 2019 |
| | | US 2019-0020067 A1 | 17 January 2019 |
| | | US 2019-0020068 A1 | 17 January 2019 |
| | | US 2019-0020070 A1 | 17 January 2019 |
| | | US 2019-0020071 A1 | 17 January 2019 |
| US 2020-0212486 A1 | 02 July 2020 | WO 2020-139602 A1 | 02 July 2020 |
| KR 10-2192087 B1 | 16 December 2020 | KR 10-2015-0101310 A | 03 September 2015 |
| | | US 2015-0243969 A1 | 27 August 2015 |
| | | US 9548490 B2 | 17 January 2017 |
| KR 10-2016-0144123 A | 16 December 2016 | CN 106252710 A | 21 December 2016 |
| | | CN 106252710 B | 26 February 2021 |
| | | CN 112768747 A | 07 May 2021 |
| | | US 10141608 B2 | 27 November 2018 |
| | | US 2016-0359196 A1 | 08 December 2016 |
| | | US 2019-0067741 A1 | 28 February 2019 |
| KR 10-1980315 B1 | 20 May 2019 | CN 109690863 A | 26 April 2019 |
| | | CN 109690864 A | 26 April 2019 |
| | | EP 3512024 A1 | 17 July 2019 |
| | | EP 3512025 A1 | 17 July 2019 |
| | | JP 2019-526913 A | 19 September 2019 |

Form PCT/ISA/210 (patent family annex) (July 2019)

**INTERNATIONAL SEARCH REPORT**
**Information on patent family members**

International application No.
**PCT/KR2022/004549**

| Patent document cited in search report | Publication date (day/month/year) | Patent family member(s) | Publication date (day/month/year) |
|---|---|---|---|
| | | JP 2019-526914 A | 19 September 2019 |
| | | KR 10-1980316 B1 | 20 May 2019 |
| | | KR 10-1980317 B1 | 20 May 2019 |
| | | KR 10-1980318 B1 | 20 May 2019 |
| | | KR 10-1980319 B1 | 20 May 2019 |
| | | KR 10-2018-0027984 A | 15 March 2018 |
| | | KR 10-2018-0027985 A | 15 March 2018 |
| | | KR 10-2018-0027986 A | 15 March 2018 |
| | | KR 10-2018-0027987 A | 15 March 2018 |
| | | KR 10-2018-0027988 A | 15 March 2018 |
| | | US 1024881 B2 | 01 June 2021 |
| | | US 2019-0198924 A1 | 27 June 2019 |
| | | US 2019-0207258 A1 | 04 July 2019 |
| | | WO 2018-048189 A1 | 15 March 2018 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *Canadian Journal of Chemistry,* 2001, vol. 79, 1042